# EUROPEAN PATENT SPECIFICATION

(11) **EP 2 517 900 B1**
(45) Date of publication and mention of the grant of the patent: **23.04.2014**
(21) Application number: 12162662.6
(22) Date of filing: 23.07.2007
(51) Int. Cl.: B60C 5/14, B32B 25/08, C08K 3/00, C08L 25/18, C08L 53/02, C08L 61/00, C08L 9/00, C08L 21/00, B60C 1/00, C08L 29/00, B32B 7/12, C08K 5/32, C08L 23/22, C08L 23/28, C08L 29/04, B29D 30/06

(54) **Laminated body and method of producing the same as well as innerliner for pneumatic tire and pneumatic tire**
Laminierter Körper und Verfahren zur Herstellung davon, sowie als Innenauskleidung für Luftreifen, und Luftreifen
Corps stratifié et son procédé de production ainsi que gomme intérieure de pneumatique et pneumatique

(30) Priority: 24.07.2006 JP 2006200762; 24.07.2006 JP 2006200895
(43) Date of publication of application: 31.10.2012
(62) Divisional of application: 07791201.2
(73) Proprietor: Bridgestone Corporation, Tokyo 104-8340 (JP)
(72) Inventor: Nohara, Daisuke, Kodaira-shi, Tokyo 187-8531 (JP); Katou, Daisuke, Kodaira-shi, Tokyo 187-8531 (JP); Takahashi, Yuwa, Kodaira-shi, Tokyo 187-8531 (JP); Nakagawa, Daisuke, Kodaira-shi, Tokyo 187-8531 (JP); Isoyama, Kota, Kurashiki-shi, Okayama 713-8550 (JP); Watanabe, Tomoyuki, Kurashiki-shi, Okayama 713-8550 (JP); Ikeda, Kaoru, Kurashiki-shi, Okayama 713-8550 (JP)
(74) Representative: Waldren, Robin Michael

(56) References cited:
- WO-A1-99/50342
- WO-A1-2006/059621
- JP-A- 2006 159 522
- JP-A- 2006 167 919
- JP-A- 2006 169 266
- US-B1- 6 334 919

## Description

### TECHNICAL FIELD

This invention relates to a laminated body and a method of producing the same, and a pneumatic tire using the laminated body, and more particularly to a laminated body having a good workability during the production and an excellent peeling resistance.

### BACKGROUND ART

Heretofore, a rubber composition using a butyl rubber, a halogenated butyl rubber or the like as a main material is used in an innerliner disposed as an air barrier layer in an inner surface of a tire for retaining an internal tire pressure. However, since such rubber compositions using these butyl-based rubbers as a main material are low in the air barrier properties, when the rubber composition is applied to the innerliner, the thickness of the innerliner is required to be around 1 mm. Therefore, the weight of the innerliner occupied in the tire is about 5%, which is an obstacle when the tire weight is decreased to improve fuel consumption of an automobile.

On the other hand, an ethylene-vinyl alcohol copolymer (hereinafter may be abbreviated as EVOH) is known to be excellent in the gas barrier properties. Since EVOH has an air permeability of not more than one-hundredth of that in the above butyl-based rubber composition for the innerliner, even if the thickness is not more than 100 µm, the internal pressure retainability of the tire can be largely improved but also the tire weight can be decreased.

Although there are existent many resins having an air permeation lower than that of the butyl-based rubber, when the air permeation is about one-tenth of the butyl-based innerliner, the effect of improving the internal pressure retainability is small unless the thickness exceeds 100 µm. While, if the thickness exceeds 100 µm, the effect of decreasing the tire weight is small, and the innerliner is broken cracks are caused in the innerliner due to the bending deformation of the tire, and hence it becomes difficult to retain the barrier properties.

On the contrary, it is possible to use EVOH even at a thickness of not more than 100 µm, so that when it is used, the breakage and cracking are hardly caused by the bending deformation during the rotation of the tire. Therefore, it can be said that it is effective to apply EVOH to the innerliner for the pneumatic tire in order to improve the internal pressure retainability of the tire. For example, JP-A-H06-40207 discloses a pneumatic tire comprising an innerliner made from EVOH.

However, when a normal EVOH is used as an innerliner, the breakage and cracking may be caused by the bending deformation because the normal EVOH is largely high in the elastic modulus as compared with a rubber usually used in the tire though the effect of improving the internal pressure retainability of the tire is large. In case of using the innerliner made from EVOH, therefore, the internal pressure retainability before using the tire is largely improved, but the internal pressure retainability after the used of the tire subjected to the bending deformation during the rotation of the tire may be lowered as compared with that before using. As a means for solving this problem, JP-A-2002-52904 discloses a technique wherein a resin composition comprising 60 to 99% by weight of an ethylene-vinyl alcohol copolymer having an ethylene content of 20 to 70 mol% and a saponification degree of not less than 85% and 1 to 40% by weight of a hydrophobic plasticizer is applied to the innerliner.

Furthermore, P-A-2004-176048 discloses a technique wherein a modified ethylene-vinyl alcohol copolymer obtained by reacting 1 to 50 parts by weight of an epoxy compound based on 100 parts by weight of an ethylene-vinyl alcohol copolymer having an ethylene content of 25 to 50% by mole is used in the innerliner. The innerliner has a higher flex resistance while retaining the gas barrier properties as comprised with the innerliner for a tire made from the conventional EVOH.

Moreover, the innerliner disclosed in JP-A-2004-176048 is preferable to be used by laminating on an auxiliary layer made from an elastomer through an adhesive layer for improving the internal pressure retainability of the tire.

US6334919 discloses a polymer composition for use in a tire comprising a thermoplastic resin and an elastomer component. JP2006159522, JP2006167919, JP2006169266 and WO2006059621 disclose laminates comprising resin and elastomer layers joined via an adhesive layer. WO9950342 discloses a laminate comprising an elastomer and an adhesive.

### DISCLOSURE OF THE INVENTION

However, there is still a room for improving the flex resistance of the innerliner even if the technique disclosed in JP-A-2004-176048 is applied.

The inventors have made examinations on a laminated body using a resin film layer containing a thermoplastic resin and a rubbery elastomer layer and found that the adhesion property between the resin film layer containing the thermoplastic resin and the rubbery elastomer layer is generally low. Therefore, when such a laminated body is used as an innerliner, the resin film layer containing the thermoplastic resin becomes easily peeled off from the rubbery elastomer layer. At this moment, there is still a room for improving the peeling resistance of the laminated body since the adhesion property between the resin film layer containing the thermoplastic resin and the rubbery elastomer layer is low even if the technique disclosed in JP-A-2004-176048 is applied.

It is, therefore, an object of the invention to provide a laminated body having a good workability during the production and an excellent peeling resistance and a method of producing the laminated body. Further, it is the other object of the invention to provide a pneumatic tire using the laminated body.

The inventors have made various studies in order to achieve the above objects and discovered that when the laminated body is formed by joining a resin film layer and a rubbery elastomer layer through an adhesive layer, an adhesive composition formed by compounding at least one of a maleimide derivative having not less than two reaction sites in its molecule and poly-p-dinitrosobenzene into a rubber component is applied to the above adhesive layer, whereby a laminated body having a good workability and an excellent peeling resistance is obtained.

That is, the laminated body according to the invention is a laminated body formed by joining a resin film layer (D) comprising at least a layer of a resin composition (C), in which a soft resin (B) having a Young's modulus at 23°C lower than that of a thermoplastic resin (A) is dispersed in a matrix made from the thermoplastic resin (A), to a rubbery elastomer layer (E) through an adhesive layer (F), wherein an adhesive composition (I) formed by compounding not less than 0.1 part by mass of at least one of a maleimide derivative (H) having not less than two reaction sites in its molecule and poly-p-dinitrosobenzene based on 100 parts by mass of a rubber component (G) is applied to the adhesive layer (F), wherein the thermoplastic resin (A) is a modified ethylene-vinyl alcohol copolymer obtained by reacting an ethylene-vinyl alcohol copolymer and a Young's modulus at -20°C of the resin composition (C) is not more than 1500 MPa. At this moment, the resin film layer (D) in the laminated body according to the invention is required to comprise at least the layer of the resin composition (C), and may further include another layer or may be constituted with only the layer of the resin composition (C). Moreover, the thermoplastic resin (A) is existent as a matrix in the resin composition (C), wherein the matrix means a continuous phase.

In the laminated body according to the invention, it is preferable that the Young's modulus at 23°C of the thermoplastic resin (A) exceeds 500 MPa and the Young's modulus at 23°C of the soft resin (B) is not more than 500 MPa.

In a preferable embodiment of the laminated body of the invention, the soft resin (B) has a functional group reacting with a. hydroxyl group.

In another preferable embodiment of the laminated body of the invention, an average particle size of the soft resin (B) is not more than 2 µm.

In the other preferable embodiment of the laminated body of the invention, a content of the soft resin (B) in the resin composition (C) is within a range of 10 to 30% by mass.

In a further preferable embodiment of the laminated body of the invention, the ethylene content of the ethylene-vinyl alcohol copolymer is preferable to be 25 to 50 mol%. Also, a saponification degree of the ethylene-vinyl alcohol copolymer is preferable to be not less than 90%. Further, the modified ethylene-vinyl alcohol copolymer is preferable to be obtained by reacting 1 to 50 parts by mass of an epoxy compound based on 100 parts by mass of the ethylene-vinyl alcohol copolymer. As the epoxy compound is preferably mentioned glycidol or epoxypropane.

In the laminated body of the invention, a Young's modulus at -20°C of the resin composition (C) is not more than 1500 MPa.

In the other preferable embodiment of the laminated body of the invention, the resin film layer (D) further comprises at least one layer made from a thermoplastic urethane-based elastomer. At this moment, the urethane-based elastomer is preferable to be a polyether-based urethane.

In a further preferable embodiment of the laminated body of the invention, the resin film layer (D) has an oxygen permeation coefficient at 20°C and 65% RH of not more than 3.0 × 10⁻¹² cm³/cm²·sec·cmHg.

In another preferable embodiment of the laminated body of the invention, the resin film layer (D) is crosslinked.

In the other preferable embodiment of the laminated body of the invention, the rubbery elastomer layer (E) comprises not more than 50% by mass of a butyl rubber and/or a halogenated butyl rubber as a rubber component.

In a further preferable embodiment of the laminated body of the invention, a thickness of the resin film layer (D) is not more than 200 µm and a thickness of the rubbery elastomer layer (E) is not less than 200 µm.

In another preferable embodiment of the laminated body of the invention, the rubber component (G) comprises not less than 10% by mass of a chlorosulfonated polyethylene.

In the other preferable embodiment of the laminated body of the invention, the rubber component (G) comprises not less than 50% by mass of a butyl rubber and/or a halogenated butyl rubber.

In a further preferable embodiment of the laminated body of the invention, the maleimide derivative (H) is 1,4-phenylene dimaleimide.

In another preferable embodiment of the laminated body of the invention, the adhesive composition (I) further comprises not less than 0.1 part by mass of a vulcanization accelerator (J) for rubber based on 100 parts by mass of the rubber component (G). At this moment, the vulcanization accelerator (J) for rubber is preferable to be a thiuram-based and/or substituted dithiocarbamate-based vulcanization accelerator.

In the other preferable embodiment of the laminated body of the invention, the adhesive composition (I) further comprises 2 to 50 parts by mass of a filler (K) based on 100 parts by mass of the rubber component (G). At this moment, the adhesive composition (I) is preferable to comprise 5 to 50 parts by mass of an inorganic filler (L) as the filler (K) based on 100 parts by mass of the rubber component (G). As the inorganic filler (L) are preferably mentioned wet-process silica, aluminum hydroxide, aluminum oxide, magnesium oxide, montmorillonite, mica, smectite, an organized montmorillonite, an organized mica and an organized smectite. Also, the adhesive composition (I) may comprise carbon black as the filler (K).

In a further preferable embodiment of the laminated body of the invention, the adhesive composition (I) further comprises not less than 0.1 part by mass of at least one of a resin (M) and a low molecular weight polymer (N) having a weight average molecular weight (Mw) of 1,000 to 1,00,000 as converted to polystyrene. As the resin (M) are preferably mentioned a C₅-based resin, a phenolic resin, a terpene-based resin, a modified terpene-based resin, a hydrogenated terpene-based resin and a rosin-based resin. Among them, the phenolic resin is particularly preferable. On the other hand, the weight average molecular weight of the low molecular weight polymer (N) as converted to polystyrene is preferable to be 1,000 to 50,000. Also, the low molecular weight polymer (N) is preferable to be a styrene-butadiene copolymer.

Also, the first method of producing the laminated body according to the invention comprises steps of coating and drying a coating solution which includes the adhesive composition (I) and an organic solvent on a surface of the resin film layer (D) to form the adhesive layer (F), and then laminating the rubbery elastomer layer (E) on a surface of the adhesive layer (F) and conducting a vulcanization treatment.

The second method of producing the laminated body according to the invention comprises steps of coating and drying a coating solution which includes the adhesive composition (I) and an organic solvent on a surface of the rubbery elastomer layer (E) to form the adhesive layer (F), and then laminating the resin film layer (D) on a surface of the adhesive layer (F) and conducting a vulcanization treatment.

In a preferable embodiment of the first or second method of producing the laminated body of the invention, a temperature of the vulcanization treatment is not lower than 120°C.

In another preferable embodiment of the first or second method of producing the laminated body of the invention, the organic solvent has a Hildebrand solubility parameter (δ value) of 14 to 20 MPa^{1/2}.

Furthermore, the pneumatic tire according to the invention is characterized by using the laminated body.

According to the invention, there can be provided a laminated body having a good workability during the production and an excellent peeling resistance, which is formed by joining the specific resin film layer and rubbery elastomer layer through the adhesive layer wherein the adhesive layer is comprised of an adhesive composition formed by compounding at least one of a maleimide derivative having not less than two reaction sites in its molecule and poly-p-dinitrosobenzene into a rubber component as well as a method of producing the laminated body.

Moreover, there can be provided a pneumatic tire using such a laminated body.

### BRIEF DESCRIPTION OF THE DRAWINGS

FIG. 1 is a schematic sectional view of an embodiment of the laminated body according to the invention.
FIG. 2 is a schematic sectional view of another embodiment of the laminated body according to the invention.
FIG. 3 is a partial sectional view of an embodiment of the pneumatic tire according to the invention.

### BEST MODE FOR CARRYING OUT THE INVENTION

### <Laminated body>

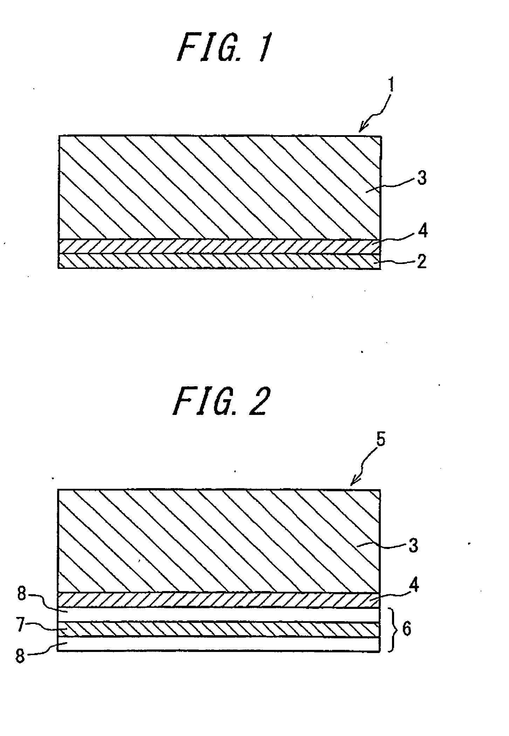

The laminated body according to the invention will be described in detail below with reference to the attached drawings. FIG. 1 is a sectional view of an embodiment of the laminated body according to the invention. The laminated body 1 of the illustrated embodiment is formed by joining a resin film layer (D) 2 and a rubbery elastomer layer (E) 3 through an adhesive layer (F) 4. At this moment, it is characterized that the resin film layer (D) 2 in the laminated body according to the invention comprises at least a layer made from a resin composition (C) in which a soft resin (B) having a Young's modulus at 23°C lower than a thermoplastic resin (A) is dispersed in a matrix made of the thermoplastic resin (A) and an adhesive composition (I) formed by compounding not less than 0.1 part by mass of at least one of a maleimide derivative (H) having not less than two reaction sites in its molecule and poly-p-dinitrosobenzene based on 100 parts by mass of a rubber component (G) is applied to the adhesive layer (F), wherein the thermoplastic resin (A) is a modified ethylene-vinyl alcohol copolymer obtained by reacting an ethylene-vinyl alcohol copolymer and a Young's modulus at -20°C of the resin composition (C) is not more than 1500 MPa. In the laminated body according to the invention, a tackiness of the adhesive layer (F) to the resin film layer (D) and rubbery elastomer layer (E) is largely improved by applying the adhesive composition (I) containing the specific maleimide derivative (H) and/or poly-p-dinitrosobenzene as a crosslinking agent and a crosslinking aid to the adhesive layer (F), whereby the workability during the production of the laminated body and the peeling resistance of the laminated body can be improved. Moreover, each of the layers 2, 3 and 4 in the laminated body 1 shown in FIG. 1 has only one layer, but each layer in the laminated body according to the invention may have two or more layers, respectively.

In the laminated body 1 of the illustrated embodiment, the resin film layer (D) 2 has only one layer made from the resin composition (C), but the laminated body according to the invention may further have another layer as shown in FIG. 2, preferably a layer of a thermoplastic urethane-based elastomer in addition to the layer made from the resin composition (C).

FIG. 2 is a sectional view of another embodiment of the laminated body according to the invention. In the laminated body 5 of the illustrated embodiment, the resin film layer (D) 6 comprises the layer 7 made from the resin composition (C) and two layers 8 of a thermoplastic urethane-based elastomer disposed adjacent to the layer 7. Moreover, the same symbol as in FIG. 1 shows the same member.

The resin film layer (D) used in the laminated body according to the invention is required to comprise at least the layer made from the resin composition (C) in which the soft resin (B) having a Young's modulus at 23°C lower than that of a thermoplastic resin (A) is dispersed in the matrix made from the thermoplastic resin (A). The thermoplastic resin (A) is preferable to have a Young's modulus at 23°C of more than 500 MPa and concretely includes an ethylene-vinyl alcohol copolymer-based resin. The ethylene-vinyl alcohol copolymer-based resin is low in the air permeation coefficient and very high in the gas barrier properties. Moreover, these thermoplastic resins (A) may be used alone or in a combination of two or more.

On the other hand, the soft resin (B) is required to have a Young's modulus at 23°C lower than that of the thermoplastic resin (A), and the Young's modulus at 23°C is preferable to be not more than 500 MPa. When the Young's modulus is not more than 500 MPa, the elastic modulus of the resin film layer (D) can be lowered, and hence the flex resistance can be improved. Also, the soft resin (B) is preferable to have a functional group reacting with a hydroxyl group. When the soft resin (B) has the functional group reacting with the hydroxyl group, the soft resin (B) is evenly dispersed in the thermoplastic resin (A). As the functional group reacting with the hydroxyl group are mentioned a maleic anhydride residue, a hydroxyl group, a carboxyl group, an amino group and the like. As the soft resin (B) having such a functional group reacting with the hydroxyl group are concretely mentioned a maleic anhydride-modified and hydrogenated styrene-ethylene-butadiene-styrene block copolymer, a maleic anhydride-modified ultralow density polyethylene and the like. Further, the soft resin (B) is preferable to have an average particle size of not more than 2 µm. When the average particle size of the soft resin (B) exceeds 2 µm, the flex resistance of the resin film layer (D) may not be sufficiently improved, and the lowering of the gas barrier properties and hence the deterioration of the internal pressure retainability of the tire may be caused. Moreover, the average particle size of the soft resin (B) in the resin composition (C) is determined, for example, by freezing a sample, cutting the sample with a microtome and then observing by means of a transmission electron microscope (TEM).

Moreover, the content of the soft resin (B) in the resin composition (C) is preferable to be within a range of 10 to 30% by mass. When the content of the soft resin (B) is less than 10% by mass, the effect of improving the flex resistance is small, while when it exceeds 30% by mass, the gas barrier properties may be lowered.

As the ethylene-vinyl alcohol copolymer-based resin is preferable a modified ethylene-vinyl alcohol copolymer obtained by reacting an ethylene-vinyl alcohol copolymer with, for example, an epoxy resin. Since such a modified ethylene-vinyl alcohol copolymer is low in the elastic modulus as compared with the usual ethylene-vinyl alcohol copolymer, the rupture resistance in the bending is high and cracks are hardly generated.

The ethylene-vinyl alcohol copolymer is preferable to have an ethylene content of 25 to 50 mol%, more preferably 30 to 48 mol%, even preferably 35 to 45 mol%. When the ethylene content is less than 25 mol%, the flex resistance, the fatigue resistance and the melt-formability may be deteriorated, while when it exceeds 50 mol%, the gas barrier properties cannot be sufficiently ensured. Also, the ethylene-vinyl alcohol copolymer is preferable to have a saponification degree of not less than 90%, more preferably not less than 95%, even preferably not less than 99%. When the saponification is less than 90%, the gas barrier properties and the thermal stability during the shaping may be insufficient. Further, the ethylene-vinyl alcohol copolymer is preferable to have a melt flow rate (MFR) at 190°C under a load of 2160 g of 0.1 to 30 g/10 minutes, more preferably 0.3 to 25 g/10 minutes.

In the invention, the method of producing the modified ethylene-vinyl alcohol copolymer is not particularly limited and preferably includes a production method wherein the ethylene-vinyl alcohol copolymer is reacted with the epoxy compound in a solution. In more particular, the modified ethylene-vinyl alcohol copolymer can be produced by adding the epoxy compound in a solution of the ethylene-vinyl alcohol copolymer in the presence of an acid catalyst or an alkali catalyst, preferably in the presence of the acid catalyst, and reacting them. As a reaction solvent are mentioned aprotic polar solvents such as dimethylsulfoxide, dimethylformamide, dimethylacetamide, N-methylpyrrolidone and the like. As the acid catalyst are mentioned p-toluenesulfonic acid, methanesulfonic acid, trifluoromethanesulfonic acid, sulfuric acid, boron trifluoride and the like. As the alkali catalyst are mentioned sodium hydroxide, potassium hydroxide, lithium hydroxide, sodium methoxide and the like. Moreover, an amount of the catalyst is preferable to be within a range of 0.0001 to 10 parts by mass based on 100 parts by mass of the ethylene-vinyl alcohol copolymer.

As the epoxy compound to be reacted with the ethylene-vinyl alcohol copolymer is preferable a monovalent epoxy compound. An epoxy compound having not less than two functionalities is crosslinked with the ethylene-vinyl alcohol copolymer to form a gel, a pimple or the like, which may lower the quality of the innerliner. Among the monovalent epoxy compounds, glycidol and epoxypropane are particularly preferable in view of the production easiness, gas barrier properties, flex resistance and fatigue resistance of the modified ethylene-vinyl alcohol copolymer. Also, it is preferable to react 1 to 50 parts by mass, more preferably 2 to 40 parts by mass, even preferably 5 to 35 parts by mass of the epoxy compound based on 100 parts by mass of the ethylene-vinyl alcohol copolymer.

The modified ethylene-vinyl alcohol copolymer is preferable to have a melt flow rate (MFR) at 190°C under a load of 2160 g of 0.1 to 30 g/10 minutes, more preferably 0.3 to 25 g/10 minutes, even preferably 0.5 to 20 g/10 minutes in view of obtaining the gas barrier properties, flex resistance and fatigue resistance.

The resin composition (C) is formed by dispersing the soft resin (B) having the Young's modulus at 23°C lower than that of the thermoplastic resin (A) in the matrix made from the thermoplastic resin (A). At this moment, the resin composition (C) has a Young's modulus at -20°C of not more than 1500 MPa. When the Young's modulus at -20°C is not more than 1500 MPa, the durability when being used in cold region can be improved.

The resin film layer (D) can be formed by milling the thermoplastic resin (A) and the soft resin (B) to prepare the resin composition (C) and then shaping into a film, a sheet or the like at a melting temperature of preferably 150 to 270°C through melt forming, preferably extrusion forming such as a T-die method, an inflation method or the like. Moreover, the resin film layer (D) may be a single layer or may be multilayered as long as it comprises the layer made from the resin composition (C). As a multilayering method is mentioned a coextrusion method or the like.

In the laminated body according to the invention, the resin film layer (D) is preferable to further comprise one or more layers made from a thermoplastic urethane-based elastomer in view of the water resistance and the adhesion property to rubber. The thermoplastic urethane-based elastomer is obtained by the reaction of polyol, an isocyanate compound and a short-chain diol. The polyol and the short-chain diol form a straight-chain polyurethane by an addition reaction with the isocyanate compound. The polyol becomes a flexible portion and the isocyanate compound and the short-chain diol become a rigid portion in the thermoplastic urethane-based elastomer. Moreover, the properties of the thermoplastic urethane-based elastomer can be varied over a wide range by changing a kind of a starting material, a compounding amount, polymerization conditions and so on. As such a thermoplastic urethane-based elastomer are preferably mentioned a polyether-based urethane and so on.

Also, the resin film layer (D) is preferable to have an oxygen permeation coefficient at 20°C and 65% RH of not more than 3.0 × 10⁻¹² cm³/cm²·sec·cmHg, more preferably not more than 1.0 × 10⁻¹² cm³/cm²·sec·cmHg, even preferably not more than 5.0 × 10⁻¹³ cm³/cm²·sec·cmHg. When the oxygen permeation coefficient at 20°C and 65% RH exceeds 3.0 x 10⁻¹² cm³/cm²·sec·cmHg, the resin film layer (D) has to be thickened in order to enhance the internal pressure retainability of the tire when the laminated body according to the invention is used as an innerliner, and hence the tire weight cannot be sufficiently decreased.

Further, the resin film layer (D) is preferable to be crosslinked. When the resin film layer (D) is not crosslinked, the laminated body (innerliner) is seriously deformed at the vulcanization step of the tire and becomes non-uniform and hence the gas barrier properties, flex resistance and fatigue resistance of the laminated body may be deteriorated. As the crosslinking method is preferable a method of irradiating energy rays. As the energy ray are mentioned an ultraviolet ray, an electron beam, an X-ray and an ionizing radiation such as an α-ray, a γ-ray or the like, and among them, the electron beam is particularly preferable. The irradiation of the electron beam is preferable to be conducted after the resin film layer (D) is shaped into a film, a sheet or the like. The dose of the electron beam is preferable to be within a range of 10 to 60 Mrad, more preferably within a range of 20 to 50 Mrad. When the dose of the electron beam is less than 10 Mrad, the crosslinking is hardly promoted, while when it exceeds 60 Mrad, the deterioration of the shaped body is easily proceeding. Also, the resin film layer (D) may be subjected to a surface treatment by an oxidation method, a roughening method or the like in order to improve the tackiness to the adhesive layer (F). As the oxidation method are mentioned a corona discharge treatment, a plasma discharge treatment, a chromic acid treatment (wet process), a flame treatment, a hot-air treatment, ozone, an irradiation treatment with an ultraviolet ray and so on. As the roughening method are mentioned a sand blasting method, a solvent treating method and so on. Among them, the corona discharge treatment is preferable.

The rubbery elastomer layer (E) is preferable to comprise a butyl rubber and a halogenated butyl rubber as a rubber component. As the halogenated butyl rubber are mentioned a chlorinated butyl rubber, a brominated butyl rubber, a modified rubber thereof and the like. As the halogenated butyl rubber can be used commercially available ones and are mentioned, for example, "Enjay Butyl HT10-66" (registered trademark) [manufactured by Enjay Chemical Co., a chlorinated butyl rubber], "Bromobutyl 2255" (registered trademark) [manufactured by JSR Corporation, a brominated butyl rubber] and "Bromobutyl 2244" (registered trademark) [manufactured by JSR Corporation, a brominated butyl rubber]. An example of a chlorinated or brominated modified rubber is "Expro 50" (registered trademark) [manufactured by Exxon Co.].

The content of the butyl rubber and/or the halogenated butyl rubber as the rubber component in the rubbery elastomer layer (E) is preferable to be not less than 50% by mass, more preferably 70 to 100% by mass in view of improving the resistance to air permeation. As the rubber component can be used a diene-based rubber, an epichlorohydrin rubber and the like in addition to the butyl rubber and the halogenated butyl rubber. These rubber components may be used alone or in a combination of two or more.

As the diene-based rubber are concretely mentioned a natural rubber (NR), an isoprene rubber (IR), a cis-1,4-polybutadiene (BR), a syndiotactic-1,2-polybutadiene (1,2BR), a styrene-butadiene copolymer rubber (SBR), an acrylonitrile-butadiene rubber (NBR), a chloroprene rubber (CR) and the like. These diene-based rubbers may be used alone or in a blend of two or more.

The rubbery elastomer layer (E) can be properly compounded with additives usually used in the rubber industry such as a reinforcing filler, a softening agent, an antioxidant, a vulcanizing agent, a vulcanization accelerator for a rubber, a scorch retarder, zinc white, stearic acid and the like in accordance with use purpose in addition to the above rubber component. As these additives may be preferably used commercially available ones.

In the laminated body according to the invention, it is preferable that the thickness of the resin film layer (D) is not more than 200 µm and the thickness of the rubbery elastomer layer (E) is not less than 200 µm. The thickness of the resin film layer (D) is more preferably about 1 µm as a lower limit, and further preferably a range of 10 to 150 µm, even preferably a range of 20 to 100 µm. When the thickness of the resin film layer (D) exceeds 200 µm, the flex resistance and fatigue resistance are deteriorated when the laminated body according to the invention is used as an innerliner, and hence the breakage and cracks are easily caused during the rotation of the tire. While when it is less than 1 µm, the gas barrier properties may be sufficiently ensured. On the other hand, when the thickness of the rubbery elastomer layer (E) is less than 200 µm, the reinforcing effect is not sufficiently developed, and hence if the breakage and cracks are caused in the resin film layer (D), the cracks are easily grown and it becomes difficult to suppress bad effects such as large breakage and crack and so on.

In the laminated body according to the invention, the thickness of the adhesive layer (F) is preferably within a range of 5 to 100 µm. When the thickness of the adhesive layer (F) is less than 5 µm, the adhesion failure may occur, while when it exceeds 100 µm, merits of weight-saving and cost become small.

As a rubber component (G) used in the adhesive composition (I) are mentioned a chlorosulfonated polyethylene, a butyl rubber, a halogenated butyl rubber, a diene-based rubber and the like. Among them, the chlorosulfonated polyethylene as well as the butyl rubber and/or halogenated butyl rubber is preferable. The chlorosulfonated polyethylene is a synthetic rubber having a saturated main chain structure obtained by chlorinating and sulfonating polyethylene with chlorine and sulfurous acid gases and is excellent in the weathering resistance, ozone resistance, heat resistance and so on and also high in the gas barrier properties. As the chlorosulfonated polyethylene can be used commercially available ones and are mentioned, for example, a trade name "Hypalon" [manufactured by DuPont Co.] and so on. Furthermore, the content of the chlorosulfonated polyethylene in the rubber component (G) is preferably not less than 10% by mass in view of improving the peeling resistance. On the other hand, the butyl rubber and halogenated butyl rubber are as described in the rubbery elastomer layer (E). The content of the butyl rubber and/or halogenated butyl rubber in the rubber component (G) is preferably not less than 50% by mass. Moreover, the rubber components (G) may be used alone or in a combination of two or more.

The adhesive composition (I) comprises a maleimide derivative (H) having not less than two reaction sites in its molecule and/or poly-p-dinitrosobenzene as a crosslinking agent and a crosslinking aid in order to improve the peeling resistance after the heating treatment. As the maleimide derivative (H) are mentioned 1,4-phenylene dimaleimide, 1,3-bis(citraconimide methyl)benzene and the like. Among them, 1,4-phenylene dimaleimide is preferable. These crosslinking agents and crosslinking aids may be used alone or in a combination of two or more. The amount of the maleimide derivative (H) and/or poly-p-dinitrosobenzene compounded in the adhesive composition (I) is not less than 0.1 part by mass based on 100 parts by mass of the rubber component (G). When the amount of the maleimide derivative (H) and/or poly-p-dinitrosobenzene compounded is less than 0.1 part by mass, the peeling resistance after the heating treatment can be sufficiently improved.

The adhesive composition (I) is preferable to further comprise a vulcanization accelerator (J) for a rubber, a filler (K), a resin (M), a low molecular weight polymer (N) and so on. The adhesive composition (I) can be properly compounded with, for example, a softening agent, an antioxidant, a vulcanizing agent, a scorch retarder, zinc white, stearic acid and the like in accordance with use purpose in addition to the above components.

As the vulcanization accelerator (J) for the rubber are mentioned a thiuram-based vulcanization accelerator, a substituted dithiocarbamate-based vulcanization accelerator, a guanidine-based vulcanization accelerator, a thiazole-based vulcanization accelerator, a sulfenamide-based vulcanization accelerator, a thiourea-based vulcanization accelerator, a xanthate-based vulcanization accelerator and the like. Among them, the thiuram-based vulcanization accelerator and the substituted dithiocarbamate-based vulcanization accelerator are preferable. These vulcanization accelerators (J) for the rubber may be used alone or in a combination of two or more. The amount of the vulcanization accelerator (J) for the rubber compounded is preferably not less than 0.1 part by mass, more preferably within a range of 0.3 to 3 parts by mass based on 100 parts by mass of the rubber component (G).

As the thiuram-based vulcanization accelerator suitable in the vulcanization accelerator (J) for the rubber are mentioned tetramethylthiuram monosulfide, tetramethylthiuram disulfide, activated tetramethylthiuram disulfide, tetraethylthiuram disulfide, tetrabutylthiuram monosulfide, tetrabutylthiuram disulfide, dipentamethylenethiuram tetrasulfide, dipentamethylenethiuram hexasulfide, tetrabenzylthiuram disulfide, tetrakis(2-ethylhexyl)thiuram disulfide and the like.

On the other hand, as the substituted dithiocarbamate-based vulcanization accelerator suitable in the vulcanization accelerator (J) for the rubber are mentioned sodium dimethyldithiocarbamate, sodium diethyldithiocarbamate, sodium di-n-butyldithiocarbamate, potassium dimethyldithiocarbamate, lead ethylphenyldithiocarbamate, zinc dimethyldithiocarbamate, zinc diethyldithiocarbamate, zinc di-n-butyldithiocarbamate, zinc dibenzyldithiocarbamate, zinc N-pentamefhylenedithiocarbamate, zinc ethylphenyldithiocarbamate, tellurium diethyldithiocarbamate, cupric dimethyldithiocarbamate, piperidine pentamethylenedithiocarbamate and the like.

As the filler (K) are preferably mentioned an inorganic filler (L), carbon black and so on. As the inorganic filler (L) are preferable a wet-process silica, aluminum hydroxide, aluminum oxide, magnesium oxide, montmorillonite, mica, smectite, an organized montmorillonite, an organized mica, an organized smectite and the like. On the other hand, as carbon black are preferable SRF, GPF, FEF, HAF, ISAF and SAF grade carbon blacks. These fillers (K) may be used alone or in a combination of two or more. The amount of the filler (K) compounded is preferably 2 to 50 parts by mass, more preferably 5 to 35 parts by mass based on 100 parts by mass of the rubber component (G).

The resin (M) has an action of improving the tackiness of the adhesive composition (I) and improving the sticking workability between the resin film layer (D) and the rubbery elastomer layer (E). As the resin (M) are preferable a C₅-based resin, a phenolic resin, a terpene-based resin, a modified terpene-based resin, a hydrogenated terpene-based resin, a rosin-based resin and the like. Among them, the phenolic resin is particularly preferable. The phenolic resin is obtained, for example, by a condensation of p-t-butylphenol and acetylene or a condensation of alkylphenol and formaldehyde in the presence of a catalyst. As the terpene-based resin are mentioned terpene-based resins such as β-pinene resin, α-pinene resin and the like. The hydrogenated terpene-based resin is obtained by subjecting such a terpene-based resin to a hydrogenation. Further, the modified terpene-based resin can be obtained by reacting terpene with phenol in the presence of a Friedel-Crafts type catalyst or condensing terpene with formaldehyde. As the rosin-based resin are mentioned, for example, a natural rosin or a rosin derivative modified by subjecting the natural rosin to a hydrogenation, a disproportionation, a dimerization, an esterification, a limation or the like. These resins (M) may be used alone or in a combination of two or more.

The low molecular weight polymer (N) has an action of improving the tackiness of the adhesive composition (I) and improving the sticking workability between the resin film layer (D) and the rubber-like elastic body layer (E), and its weight average molecular weight as converted to polystyrene is preferably 1,000 to 100,000, more preferably 1,000 to 50,000. As the low molecular weight polymer (N) is preferable a styrene-butadiene copolymer. The production method of the styrene-butadiene copolymer is not particularly limited and, for example, the styrene-butadiene copolymer can be produced by copolymerizing butadiene and styrene in a hydrocarbon solvent such as cyclohexane or the like with an organolithium compound as a polymerization initiator and an ether or a tertiary amine as a randomizer at a temperature of 50 to 90°C. The weight average molecular weight of the resulting copolymer can be controlled by adjusting the amount of the polymerization initiator, and the microstructure of the conjugated diene compound portion in the copolymer can be controlled by using the randomizer. In the laminated body according to the invention, the low molecular weight polymers (N) may be used alone or in a combination with the resin (M). Moreover, the amount of the resin (M) and/or the low molecular weight polymer (N) compounded is preferable to be not less than 0.1 parts by mass based on 100 parts by mass of the rubber component (G).

In the method of producing the laminated body according to the invention, the laminated body according to the invention can be produced, for example, by applying and drying a coating solution obtained by dispersing or dissolving the adhesive composition (I) in an organic solvent onto the surface of the resin film layer (D) to form the adhesive layer (F), and then laminating the rubbery elastomer layer (E) on the surface of the adhesive layer (F) and conducting a vulcanization treatment. In an alternative method of producing the laminated body according to the invention, the above coating solution is applied and dried onto the surface of the rubbery elastomer layer (E) to form the adhesive layer (F) and the resin film layer (D) is laminated on the surface of the adhesive layer (F), and thereafter the vulcanization treatment may be conducted. Moreover, the temperature of the vulcanization treatment is preferably not lower than 120°C, more preferably within a range of 125 to 200°C, even preferably within a range of 130 to 180°C. The time of the vulcanization treatment is preferable to be within a range of 10 to 120 minutes.

The method of mixing the adhesive composition (I) and the organic solvent is conducted according to the usual method. The concentration of the adhesive composition (I) in the coating solution prepared according to such a method is preferably within a range of 5 to 50% by mass, more preferably 10 to 30% by mass. As the organic solvent are mentioned toluene, xylene, n-hexane, cyclohexane, chloroform, methyl ethyl ketone and the like. These organic solvents may be used alone or in a combination of two or more. In the organic solvent, a Hildebrand solubility parameter (δ value) is preferable to be within a range of 14 to 20 MPa^{1/2}. When the Hildebrand solubility parameter (δ value) is within the above specific range, the affinity between the organic solvent and the rubber component (G) becomes high.

### <Pneumatic tire>

The pneumatic tire according to the invention is characterized by using the above-mentioned laminated body as, for example, an innerliner. In the pneumatic tire using the above laminated body, the tackiness of the adhesive layer (F) to the resin film layer (D) and the rubbery elastomer layer (E) is high and the tire can be produced with a good workability, and the peeling resistance in case of using as an innerliner is high.

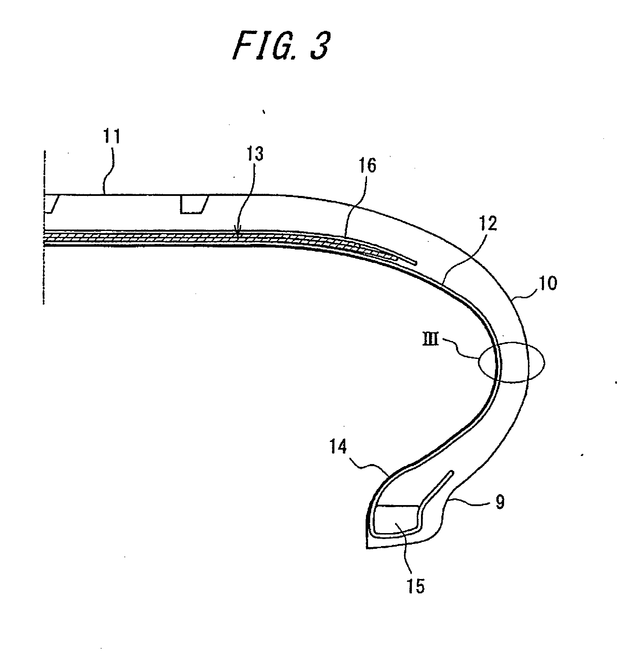

The pneumatic tire according to the invention will be described in detail with reference to the accompanying drawings. FIG. 3 is a partial section view of an embodiment of the pneumatic tire according to the invention. The tire shown in FIG. 3 comprises a pair of bead portions 9, a pair of sidewall portions 10, a tread portion 11 continuing to both the sidewall portions 10, a carcass 12 toroidally extending between the pair of the bead portions 9 to reinforce these portions 9, 10, 11, and a belt 13 disposed on an outside of a crown portion of the carcass 12 in a radial direction of the tire and comprised of two belt layers, and further includes an innerliner 14 disposed on an inner face of the tire inside the carcass 12.

In the tire of the illustrated embodiment, the carcass 12 is composed of a main body portion toroidally extending between a pair of bead cores 15 embedded in the respective bead portions 9 and a turnup portion wound around each bead core 15 from an inside to an outside in a widthwise direction of the tire outward in the radial direction. In the pneumatic tire according to the invention, the ply number and structure of the carcass 12 are not limited thereto.

The belt 13 in the illustrated tire is comprised of two belt layers, but the number of the belt layers constituting the belt 13 is not limited thereto in the tire according to the invention. At this moment, the belt layer is usually a rubberized layer of cords each extending obliquely with respect to an equatorial plane of the tire, and the belt 13 is constructed by laminating the two belt layers so as to cross the cords of the belt layers with each other with respect to the equatorial plane. Moreover, the illustrated tire is provided with a belt reinforcing layer 16 disposed on an outside of the belt 13 in the radial direction of the tire so as to cover the whole of the belt 13. However, the tire according to the invention may not be provided with the belt reinforcing layer 16, or may be provided with a belt reinforcing layer of another structure. At this moment, the belt reinforcing layer 16 is usually a rubberized layer of cords arranged substantially in parallel with respect to the circumferential direction of the tire. Moreover, the pneumatic tire according to the invention may be further provided with a well-known tire member such as a bead filler, a rim guard or the like, if necessary.

In the pneumatic tire according to the invention, the laminated body having a structure shown in FIG. 1 or 2 is preferably used in the innerliner 14. The rubbery elastomer layer 3 in FIG. 1 or 2 is joined to the inner face of the tire inside the carcass 12.

The first pneumatic tire according to the invention can be produced according to the usual method by applying the above-mentioned laminated body to the innerliner 14. In the pneumatic tires according to the invention, as a gas filled into the tire can be used usual air or air having a regulated partial oxygen pressure but also inert gases such as nitrogen and so on.

### <<EXAMPLE>>

The following examples are given in illustration of the invention and are not intended as limitations thereof.

### (Synthesis Example 1 of thermoplastic resin (A))

Into a pressure reaction tank are charged 2 parts by mass of ethylene-vinyl alcohol copolymer having an ethylene content of 44 mol% and a saponification degree of 99.9% (MFR at 190°C under a load of 2160 g: 5.5 g/10 minutes) and 8 parts by mass of N-methyl-2-pyrrolidone, which are stirred under heating at 120°C for 2 hours to completely dissolve ethylene-vinyl alcohol copolymer. The resulting solution is added with 0.4 part by mass of epoxypropane as an epoxy compound and heated at 160°C for 4 hours. After the completion of the heating, the reaction mass is precipitated into 100 parts by mass of a distilled water, and N-methyl-2-pyrrolidone and an unreacted epoxypropane are washed out with a large quantity of a distilled water to obtain a modified ethylene-vinyl alcohol copolymer. Then, the thus modified ethylene-vinyl alcohol copolymer is finely pulverized to a particle size of about 2 mm in a grinder and again washed with a large quantity of a distilled water sufficiently. After the washing, the particles are dried at room temperature under vacuum for 8 hours and melted at 200°C in a biaxial extruder to obtain pellets. The resulting modified ethylene-vinyl alcohol copolymer has a Young's modulus at 23°C of 1300 MPa. At this moment, the Young's modulus at 23°C of the modified ethylene-vinyl alcohol copolymer is measured according to the following method.

### (1) Measurement of Young's modulus at 23°C

The pellets are used in a biaxial extruder manufactured by Toyo Seiki Co., Ltd. under the following extruding conditions to prepare a single layer film of 20 µm in thickness. Then, the film is used to produce a strip specimen of 15 mm in width, which is left to stand in a constant temperature room under conditions of 23°C and 50% RH for 1 week and thereafter S-S curve (stress-strain curve) at 23°C and 50% RH is measured by using an auto-graph [AG-A500 Model] manufactured by Shimadzu Corporation under conditions that a distance between chucks is 50 mm and a tensile rate is 50 mm/minute to determine a Young's modulus from an initial slope of the S-S curve.
Screw: 20 mm φ, full flight
Temperatures set in cylinders and die: C1/C2/C3/die = 200/200/200/200 (°C)

The ethylene content and the saponification degree of the ethylene-vinyl alcohol copolymer are values calculated from a spectrum obtained by ¹H-NMR measurement [using "JNM-GX-500 Model" manufactured by JEOL Ltd.] using a deuterated dimethyl sulfoxide as a solvent. Also, the melt flow rate (MFR) of the ethylene-vinyl alcohol copolymer is determined from a resin amount extruded per unit time (g/10 minutes) by filling a sample into a cylinder having an inner diameter of 9.55 mm and a length of 162 mm in Melt Indexer L244 [manufactured by Takara Kogyo K. K.], melting at 190°C, and then evenly applying a load with a plunger having a weight of 2160 g and a diameter of 9.48 mm to extrude through an orifice having a diameter of 2.1 mm located at the center of the cylinder. However, when the melting point of the ethylene-vinyl alcohol copolymer is around 190°C or exceeds 190°C, the melt flow rate (MFR) is represented as a value calculated by measuring at plural temperatures above the melting point under a load of 2160 g and plotting reciprocals of the absolute temperature on the abscissa and logarithms of MFR on the ordinate in a semi-logarithmic graph and extrapolating into 190°C.

### (Synthesis Example 3 of soft resin (B))

A maleic anhydride-modified and hydrogenated styrene-ethylene-butadiene-styrene block copolymer is synthesized according to the well-known method to obtain pellets. The resulting maleic anhydride-modified and hydrogenated styrene-ethylene-butadiene-styrene block copolymer has a Young's modulus at 23°C of 3 MPa, a styrene content of 20% and a maleic anhydride amount of 0.3 meq/g. Moreover, the Young's modulus is measured in the same method as in Synthesis Example 1.

### <Laminated body>

### (Production of film 1-1)

A resin composition (C) is prepared by milling the thermoplastic resin (A) and the soft resin (B) obtained in Synthesis Examples 1 and 3 in a biaxial extruder. The content of the soft resin (B) in the resin composition (C) is 20% by mass. The average particle size of the soft resin (B) in the resin composition (C) is 1.2 µm as measured by a transmission electron microscope after a sample of the resulting resin composition (B) is frozen and cut into pieces with a microtome. The Young's modulus at -20°C of the resin composition (C) is 750 MPa as measured in the same manner as the method of measuring Young's modulus in Synthesis Example 1 except that the set temperature is changed to -20°C. Then, the resulting resin composition (C) and a thermoplastic polyurethane (TPU) [KRAMIRON 3190 manufactured by Kuraray Co., Ltd.] are used to prepare a three-layer film 1-1 (TPU layer/resin composition (C) layer/TPU layer, thickness: 20 µm/ 20 µm/ 20 µm) with a two-type and three-layer coextruding apparatus under the following coextrusion conditions.

Each extruding temperature of resin: C1/C2/C3/die = 170/170/200/200°C

Specification of extruder for each resin:
Thermoplastic polyurethane: 25 mm φ extruder P25-18AC [manufactured by Ohsaka Seiki Kosaku Co., Ltd.]
Resin composition (C): 20 mm φ extruder laboratory machine ME model CO-EXT [manufactured by Toyo Seiki Co., Ltd.]
Specification of T-die: for two-type and three-layer of 500 mm in width [manufactured by Plastic Engineering Laboratory Co., Ltd.]
Temperature of cooling roll: 50°C
Pick-up rate: 4 m/min

The oxygen permeation coefficient of the film 1-1 obtained as mentioned above is 9.1 × 10⁻¹³ cm³/cm²·sec·cmHg as measured according to the following method.

### (2) Measurement of oxygen permeation coefficient of film 1-1

The film 1-1 is conditioned at 20°C and 65% RH for 5 days. The two conditioned films are used and their oxygen permeation coefficients are measured with MOCON OX-TRAN 2/20 Model manufactured by Modern Control Inc. according to JIS K7126 (Equal Pressure Method) under conditions at 20°C and 65% RH, from which an average value is calculated.

### (Production of rubbery elastomer layer (E))

A rubber composition is prepared by compounding 60 parts by mass of carbon black GPF [#55 manufactured by Asahi Carbon Co., Ltd.], 7 parts by mass of SUNPAR 2280 [manufactured by Japan Sun Oil Co., Ltd.], 1 part by mass of stearic acid [manufactured by Asahi Denka Industrial Co., Ltd.], 1.3 parts by mass of Nocceler DM [manufactured by Ouchi Shinko Chemical Industrial Co., Ltd.], 3 parts by mass of zinc oxide [manufactured by Hakusui Chemical Industries, Ltd.] and 0.5 part by mass of sulfur [manufactured by Tsurumi Chemical Co., Ltd.] based on 100 parts by mass of a brominated butyl rubber [Bromobutyl 2244 manufactured by JSR Corporation]. An unvulcanized rubbery elastomer layer (E) of 500 µm in thickness is produced by using the rubber composition.

### (Examples 1-1 to 1-16)

An adhesive composition (I) having a compounding recipe as shown in Tables 1 and 2 is prepared according to the usual method. Then, a coating solution is prepared by adding the resulting adhesive composition (I) to 1000 parts by mass of toluene (δ value: 18.2 MPa^{1/2}), and dispersing or dissolving thereinto. Thereafter, the three-layer film 1-1 is subjected to a crosslinking treatment by an electron beam irradiation with an electron beam irradiation machine "Curetron for industrial production EBC200-100" manufactured by Nissin High Voltage Co., Ltd. under conditions that an acceleration voltage is 200 kV and an irradiation energy is 30 Mrad. The coating solution is applied on one-side surface of the resulting crosslinked film and dried to form an adhesive layer (E). The rubbery elastomer layer (E) is laminated on the surface of the adhesive layer (F) and then vulcanized at 160°C for 15 minutes to produce a laminated body having a structure shown in FIG. 2.

### (Comparative Example 1-1)

A laminated body having a structure shown in FIG. 2 is produced in the same manner as in the above examples except that Metalock R-46 [manufactured by Toyo Kagaku Laboratory] is used as an adhesive layer (F).

Then, the tackiness and the peeling resistance of the laminated bodies produced as mentioned above are measured according to the following methods. The results are shown in Tables 1 and 2.

### (3) Tackiness

The tackiness is measured by conducting a probe tack test according to JIS Z0237 and represented by an index on the basis that the tackiness of the laminated body in Comparative Example 1-1 is 100. The higher the index value, the better the workability.

### (4) Peeling resistance

The peeling resistance is measured by conducting a T-type peel test according to JIS K6854 and represented by an index on the basis that the peeling resistance of Comparative Example 1-1 is 100. The higher the index value, the larger the peeling resistance.

**Table 1**

| | | Comparative Example | Example | | | | | | | |
|---|---|---|---|---|---|---|---|---|---|---|
| | | 1-1 | 1-1 | 1-2 | 1-3 | 1-4 | 1-5 | 1-6 | 1-7 | 1-8 |
| Metalock R-46 | Compounding amount | 100 | - | - | - | - | - | - | - | - |
| Brominated butyl rubber *1 | | - | 100 | - | 90 | 100 | 90 | 90 | 90 | 90 |
| Butyl rubber *2 | | - | - | - | - | - | - | - | - | - |
| Isoprene rubber *3 | | - | **-** | 100 | - | - | - | - | - | - |
| Chlorosulfonated polystyrene *4 | | - | - | - | 10 | - | 10 | 10 | 10 | 10 |
| Carbon brack *5 | | - | - | - | - | 10 | 10 | 10 | 10 | 10 |
| Wet-process silica *6 | | - | - | - | - | - | - | - | - | - |
| Magnesium oxide *7 | | - | - | - | - | - | - | - | - | - |
| Phenol resin *8 | | - | - | - | - | - | - | - | 20 | 20 |
| Stearic acid *9 | | - | 1 | 1 | 1 | 1 | 1 | 1 | 1 | 1 |
| Zinc white *10 | | - | 3 | 3 | 3 | 3 | 3 | 3 | 3 | 3 |
| Poly-p-dinitrosobenzene *11 | | - | 3 | 3 | 3 | 3 | 3 | 3 | 3 | - |
| 1,4- phenylene dimaleimide *12 | | - | - | - | - | - | - | - | - | 3 |
| Vulcanization accelerator ZTC *13 | | - | - | - | - | - | - | 1 | 1 | 1 |
| Vulcanization accelerator TOT-N *14 | | - | - | - | - | - | - | - | - | - |
| Vulcanization accelerator TBZTD *15 | | - | - | - | - | - | - | - | - | - |
| Vulcanization accelerator DM *16 | | - | 0.5 | 0.5 | 0.5 | 0.5 | 0.5 | 0.5 | 0.5 | 0.5 |
| Vulcanization accelerator D *17 | | - | 1 | 1 | 1 | 1 | 1 | 1 | 1 | 1 |
| Sulfur *18 | | - | 1.5 | 1.5 | 1.5 | 1.5 | 1.5 | 1.5 | 1.5 | 1.5 |
| Tackiness [index] | | 100 | 200 | 185 | 185 | 191 | 180 | 180 | 185 | 179 |
| Peeling resistance [index] | | 100 | 101 | 102 | 104 | 102 | 105 | 107 | 104 | 106 |

**Table 2**

| | | Example | | | | | | | |
|---|---|---|---|---|---|---|---|---|---|
| | | 1-9 | 1-10 | 1-11 | 1-12 | 1-13 | 1-14 | 1-15 | 1-16 |
| Metalock R-46 | Compounding amount | - | - | - | - | - | - | - | - |
| Brominated butyl rubber *1 | | 90 | 90 | - | - | 90 | 70 | 90 | 90 |
| Butyl rubber *2 | | - | - | 90 | - | - | - | - | - |
| Isoprene rubber *3 | | - | - | - | 90 | - | 20 | - | - |
| Chlorosulfonated polystyrene *4 | | 10 | 10 | 10 | 10 | 10 | 10 | 10 | 10 |
| Carbon brack *5 | | 10 | 10 | 10 | 10 | 25 | 25 | 10 | 10 |
| Wet-process silica *6 | | - | - | - | - | - | - | 5 | - |
| Magnesium oxide *7 | | - | - | - | - | - | - | - | 5 |
| Phenol resin *8 | | 20 | 20 | 20 | 20 | 20 | 20 | 20 | 20 |
| Stearic acid *9 | | 1 | 1 | 1 | 1 | 1 | 1 | 1 | 1 |
| Zinc white *10 | | 3 | 3 | 3 | 3 | 3 | 3 | 3 | 3 |
| Poly-p-dinitrosobenzene *11 | | 3 | 3 | 3 | 3 | 3 | 3 | 3 | 3 |
| 1,4- phenylene dimaleimide *12 | | - | - | - | - | - | - | - | - |
| Vulcanization accelerator ZTC *13 | | - | - | 1 | 1 | 1 | 1 | 1 | 1 |
| Vulcanization accelerator TOT-N * 14 | | 1 | - | - | - | - | - | - | - |
| Vulcanization accelerator TBZTD *15 | | - | 1 | - | - | - | - | - | - |
| Vulcanization accelerator DM *16 | | 0.5 | 0.5 | 0.5 | 0.5 | 0.5 | 0.5 | 0.5 | 0.5 |
| Vulcanization accelerator D *17 | | 1 | 1 | 1 | 1 | 1 | 1 | 1 | 1 |
| Sulfur *18 | | 1.5 | 1.5 | 1.5 | 1.5 | 1.5 | 1.5 | 1.5 | 1.5 |
| Tackiness [index] | | 180 | 178 | 178 | 179 | 160 | 155 | 170 | 171 |
| Peeling resistance [index] | | 105 | 104 | 110 | 109 | 115 | 120 | 115 | 112 |

| | | | | | | | | | |
|---|---|---|---|---|---|---|---|---|---|
| [0099] *1 Bromobutyl 2244 manufactured by JSR Corporation. *2 Butyl 268 manufactured by JSR Corporation. *3 Nipol IR2000 manufactured by Zeon Corporation. *4 Hypalon manufactured by DuPont Dow elastomers L. L. C. *5 SEAST NB manufactured by Tokai Carbon Co., Ltd. *6 TOKUSIL USG-B manufactured by Tokuyama Co., Ltd. *7 STARMAG manufactured by Konoshima Chemical Co., Ltd. *8 PR-SC-400 manufactured by SumitomoBakelite Co., Ltd. *9 Stearic acid 50S manufactured by Shin-Nippon Rika Co., Ltd. *10 Two kinds of zinc oxide, powder, manufactured by Hakusui Tech Co., Ltd. *11 VULNOC DNB manufactured by Ouchi Shinko Chemical Industrial Co., Ltd. *12 VULNOC PM manufactured by Ouchi Shinko Chemical Industrial Co., Ltd. *13 NOCCELER ZTC manufactured by Ouchi Shinko Chemical Industrial Co., Ltd., zinc dibenzyldithiocarbamate. *14 NOCCELER TOT-N manufactured by Ouchi Shinko Chemical Industrial Co., Ltd., tetrakis(2-ethylhexyl)thiuram disulfide. *15 Sanceler TBZTD manufactured by Sanshin Chemical Industry Co., Ltd., tetrabenzylthiuram disulfide. *16 NOCCELER DM manufactured by Ouchi Shinko Chemical Industrial Co., Ltd., di-2-benzothiazolyl disulfide. *17 NOCCELER D manufactured by Ouchi Shinko Chemical Industrial Co., Ltd., 1,3-diphenylguanidine. *18 Golden Flower sulfur powder manufactured by Tsurumi Chemical Co., Ltd. | | | | | | | | | |

As seen from Tables 1 and 2, the laminated bodies of the examples are high in the tackiness as compared with the laminated body of Comparative Example 1-1 and have a good workability in the production of the laminated body. Also, it has been found that the laminated bodies of the examples are excellent in the peeling resistance as compared with the laminated body of Comparative Example 1-1.

## Claims

1. A laminated body formed by joining a resin film layer (D) comprising at least a layer of a resin composition (C), in which a soft resin (B) having a Young's modulus at 23°C lower than that of a thermoplastic resin (A) is dispersed in a matrix made from the thermoplastic resin (A), to a rubbery elastomer layer (E) through an adhesive layer (F), wherein an adhesive composition (I) formed by compounding not less than 0.1 part by mass of at least one of a maleimide derivative (H) having not less than two reaction sites in a molecule thereof and poly-p-dinitrosobenzene based on 100 parts by mass of a rubber component (G) is applied to the adhesive layer (F), wherein the thermoplastic resin (A) is a modified ethylene-vinyl alcohol copolymer obtained by reacting an ethylene-vinyl alcohol copolymer and a Young's modulus at -20°C of the resin composition (C) is not more than 1500 MPa.

2. A laminated body according to claim 1, wherein the Young's modulus at 23°C of the thermoplastic resin (A) exceeds 500 MPa and the Young's modulus at 23°C of the soft resin (B) is not more than 500 MPa.

3. A laminated body according to claim 1, wherein the soft resin (B) has a functional group reacting with a hydroxyl group.

4. A laminated body according to claim 1, wherein an average particle size of the soft resin (B) is not more than 2 µm.

5. A laminated body according to claim 1, wherein a content of the soft resin (B) in the resin composition (C) is within a range of 10 to 30% by mass.

6. A laminated body according to claim 1, wherein an ethylene content of the ethylene-vinyl alcohol copolymer is 25 to 50 mol%.

7. A laminated body according to claim 1, wherein a saponification degree of the ethylene-vinyl alcohol copolymer is not less than 90%.

8. A laminated body according to claim 1, wherein the modified ethylene-vinyl alcohol copolymer is obtained by reacting 1 to 50 parts by mass of an epoxy compound based on 100 parts by mass of the ethylene-vinyl alcohol copolymer.

9. A laminated body according to claim 8, wherein the epoxy compound is glycidol or epoxypropane.

10. A laminated body according to claim 1, wherein the resin film layer (D) further comprises at least one layer made from a thermoplastic urethane-based elastomer.

11. A laminated body according to claim 10, wherein the urethane-based elastomer is a polyether-based urethane.

12. A laminated body according to claim 1, wherein the resin film layer (D) has an oxygen permeation coefficient at 20°C and 65% RH of not more than 3.0 × 10⁻¹² cm³/cm²·sec·cmHg.

13. A laminated body according to claim 1, wherein the resin film layer (D) is crosslinked.

14. A laminated body according to claim 1, wherein the rubbery elastomer layer (E) comprises not more than 50% by mass of a butyl rubber and/or a halogenated butyl rubber as a rubber component.

15. A laminated body according to claim 1, wherein a thickness of the resin film layer (D) is not more than 200 µm and a thickness of the rubbery elastomer layer (E) is not less than 200 µm.

16. A laminated body according to claim 1, wherein the rubber component (G) comprises not less than 10% by mass of a chlorosulfonated polyethylene.

17. A laminated body according to claim 1, wherein the rubber component (G) comprises not less than 50% by mass of a butyl rubber and/or a halogenated butyl rubber.

18. A laminated body according to claim 1, wherein the maleimide derivative (H) is 1,4-phenylenedimaleimide.

19. A laminated body according to claim 1, wherein the adhesive composition (I) further comprises not less than 0.1 part by mass of a vulcanization accelerator (J) for rubber based on 100 parts by mass of the rubber component (G).

20. A laminated body according to claim 19, wherein the vulcanization accelerator (J) for rubber is a thiuram-based and/or substituted dithiocarbamate-based vulcanization accelerator.

21. A laminated body according to claim 1, wherein the adhesive composition (I) further comprises 2 to 50 parts by mass of a filler (K) based on 100 parts by mass of the rubber composition (G).

22. A laminated body according to claim 21, wherein the adhesive composition (I) comprises 5 to 50 parts by mass of an inorganic filler (L) as the filler (K) based on 100 parts by mass of the rubber composition (G).

23. A laminated body according to claim 22, wherein the inorganic filler (L) is at least one selected from the group consisting of a wet-process silica, aluminum hydroxide, aluminum oxide, magnesium oxide, montmorillonite, mica, smectite, an organized montmorillonite, an organized mica and an organized smectite.

24. A laminated body according to claim 21, wherein the adhesive composition (I) comprises carbon black as the filler (K).

25. A laminated body according to claim 1, wherein the adhesive composition (I) further comprises not less than 0.1 part by mass of at least one of a resin (M) and a low molecular weight polymer (N) having a weight average molecular weight (Mw) of 1,000 to 100,000 as converted to polystyrene.

26. A laminated body according to claim 25, wherein the weight average molecular weight of the low molecular weight polymer (N) as converted to polystyrene is 1,000 to 50,000.

27. A laminated body according to claim 25, wherein the resin (M) is at least one selected from the group consisting of a C₅-based resin, a phenolic resin, a terpene-based resin, a modified terpene-based resin, a hydrogenated terpene-based resin and a rosin-based resin.

28. A laminated body according to claim 27, wherein the resin (M) is a phenolic resin.

29. A laminated body according to claim 25, wherein the low molecular weight polymer (N) is a styrene-butadiene copolymer.

30. A method of producing a laminated body as claimed in any one of claims 1 to 29, which comprises steps of coating and drying a coating solution which includes an adhesive composition (I) and an organic solvent on a surface of a resin film layer (D) to form an adhesive layer (F), and then laminating a rubbery elastomer layer (E) on a surface of the adhesive layer (F) and conducting a vulcanization treatment.

31. A method of producing a laminated body as claimed in any one of claims 1 to 29, which comprises steps of coating and drying a coating solution which includes an adhesive composition (I) and an organic solvent on a surface of a rubbery elastomer layer (E) to form an adhesive layer (F), and then laminating a resin film layer (D) on a surface of the adhesive layer (F) and conducting a vulcanization treatment.

32. A method of producing a laminated body according to claim 30 or 31, wherein a temperature of the vulcanization treatment is not lower than 120°C.

33. A method of producing a laminated body according to claim 30 or 31, wherein the organic solvent has a Hildebrand solubility parameter (δ value) of 14 to 20 MPa^{1/2}.

34. A pneumatic tire **characterized by** using a laminated body as claimed in any one of claims 1 to 29.

## Patentansprüche

1. Laminierter Körper, der durch Verbinden einer Harzfilmschicht (D), die mindestens eine Schicht aus einer Harzzusammensetzung (C) umfasst, in der ein weiches Harz (B), das einen Youngschen Modul bei 23°C aufweist, der geringer ist als der eines thermoplastischen Harzes (A), in einer Matrix bestehend aus dem thermoplastischen Harz (A) dispergiert ist, mit einer kautschukartigen Elastomerschicht (E) durch eine klebefähige Schicht (F) gebildet wird, wobei eine klebefähige Zusammensetzung (I), die durch Compoundieren von nicht weniger als 0,1 Masseteilen mindestens eines Maleimidderivats (H), das nicht weniger als zwei Reaktionsorte in einem Molekül davon aufweist, und Poly-p-dinitrosobenzol, auf 100 Masseteile einer Kautschukkomponente (G) bezogen, gebildet wird, auf die klebefähige Schicht (F) aufgebracht wird, wobei das thermoplastische Harz (A) ein modifiziertes Ethylen-Vinylalkohol-Copolymer ist, das durch Reagieren eines Ethylen-Vinylalkohol-Copolymers erhalten wird und ein Youngscher Modul bei -20°C der Harzzusammensetzung (C) maximal 1500 MPa beträgt.

2. Laminierter Körper nach Anspruch 1, wobei der Youngsche Modul bei 23°C des thermoplastischen Harzes (A) 500 MPa übersteigt und der Youngsche Modul bei 23°C des weichen Harzes (B) maximal 500 MPa beträgt.

3. Laminierter Körper nach Anspruch 1, wobei das weiche Harz (B) eine mit einer Hydroxylgruppe reagierende funktionelle Gruppe aufweist.

4. Laminierter Körper nach Anspruch 1, wobei eine durchschnittliche Partikelgröße des weichen Harzes (B) maximal 2 µm beträgt.

5. Laminierter Körper nach Anspruch 1, wobei ein Gehalt des weichen Harzes (B) in der Harzzusammensetzung (C) innerhalb eines Bereichs von 10 bis 30 Masse-% liegt.

6. Laminierter Körper nach Anspruch 1, wobei ein Ethylengehalt des Ethylen-Vinylalkohol-Copolymers 25 bis 50 Mol-% beträgt.

7. Laminierter Körper nach Anspruch 1, wobei ein Verseifungsgrad des Ethylen-Vinylalkohol-Copolymers mindestens 90 % beträgt.

8. Laminierter Körper nach Anspruch 1, wobei das modifizierte Ethylen-Vinylalkohol-Copolymer durch Reagieren von 1 bis 50 Masseteilen einer Epoxidverbindung, auf 100 Masseteile des Ethylen-Vinylalkohol-Copolymers bezogen, erhalten wird.

9. Laminierter Körper nach Anspruch 8, wobei die Epoxidverbindung Glycidol oder Epoxypropan ist.

10. Laminierter Körper nach Anspruch 1, wobei die Harzfilmschicht (D) ferner mindestens eine Schicht umfasst, die aus einem thermoplastischen Elastomer auf der Basis von Urethan hergestellt ist.

11. Laminierter Körper nach Anspruch 10, wobei das Elastomer auf der Basis von Urethan ein Urethan auf de Basis von Polyether ist.

12. Laminierter Körper nach Anspruch 1, wobei die Harzfilmschicht (D) einen Sauerstoffpermeationskoeffizienten bei 20°C und 65 % relativer Feuchte von maximal 3,0 x 10⁻¹² cm³/cm²·sec· cmHG aufweist.

13. Laminierter Körper nach Anspruch 1, wobei die Harzfilmschicht (D) vernetzt ist.

14. Laminierter Körper nach Anspruch 1, wobei die kautschukartige Elastomerschicht (E) maximal 50 Masse-% eines Butylkautschuks und/oder eines halogenierten Butylkautschuks als Kautschukkomponente umfasst.

15. Laminierter Körper nach Anspruch 1, wobei eine Dicke der Harzfilmschicht (D) maximal 200 µm beträgt und eine Dicke der kautschukartigen Elastomerschicht (E) nicht weniger als 200 µm beträgt.

16. Laminierter Körper nach Anspruch 1, wobei die Kautschukkomponente (G) nicht weniger als 10 Masse-% eines chlorsulfonierten Polyethylens umfasst.

17. Laminierter Körper nach Anspruch 1, wobei die Kautschukkomponente (G) nicht weniger als 50 Masse-% eines Butylkautschuks und/oder eines halogenierten Butylkautschuks umfasst.

18. Laminierter Körper nach Anspruch 1, wobei das Maleimiddderivat (H) 1,4-Phenylendimaleimid ist.

19. Laminierter Körper nach Anspruch 1, wobei die klebefähige Zusammensetzung (I) ferner nicht weniger als 0,1 Masseteile eines Vulkanisationsbeschleunigers (J) für Kautschuk, auf 100 Masseteile der Kautschukkomponente (G) bezogen, umfasst.

20. Laminierter Körper nach Anspruch 19, wobei der Vulkanisationsbeschleuniger (J) für Kautschuk ein Vulkanisationsbeschleuniger auf der Basis von Thiuram und/oder ein Vulkanisationsbeschleuniger auf der Basis von substituiertem Dithiocarbamat ist.

21. Laminierter Körper nach Anspruch 1, wobei die klebefähige Zusammensetzung (I) ferner 2 bis 50 Masseteile eines Füllstoffs (K), auf 100 Masseteile der Kautschukzusammensetzung (G) bezogen, umfasst.

22. Laminierter Körper nach Anspruch 21, wobei die klebefähige Zusammensetzung (I) 5 bis 50 Masseteile eines anorganischen Füllstoffs (L) als Füllstoff (K), auf 100 Masseteile der Kautschukzusammensetzung (G) bezogen, umfasst.

23. Laminierter Körper nach Anspruch 22, wobei der anorganische Füllstoff (L) wenigstens einer ist ausgewählt aus der Gruppe bestehend aus einem Nassprozess-Siliziumdioxid, Aluminiumhydroxid, Aluminiumoxid, Magnesiumoxid, Montmorillonit, Glimmer, Smektit, einem organisierten Montmorillonit, einem organisierten Glimmer und einem organisierten Smektit.

24. Laminierter Körper nach Anspruch 21, wobei die klebefähige Zusammensetzung (I) Ruß als Füllstoff (K) umfasst.

25. Laminierter Körper nach Anspruch 1, wobei die klebefähige Zusammensetzung (I) ferner nicht weniger als 0,1 Masseteile mindestens eines Harzes (M) und eines niedermolekularen Polymers (N) umfasst, das ein gewichtsdurchschnittliches Molekulargewicht (Mw) von 1000 bis 100000, in Polystyrol umgewandelt, aufweist.

26. Laminierter Körper nach Anspruch 25, wobei das gewichtsdurchschnittliche Molekulargewicht des niedermolekularen Polymers (N), in Polystyrol umgewandelt, 1000 bis 50000 beträgt.

27. Laminierter Körper nach Anspruch 25, wobei das Harz (M) wenigstens eines ist ausgewählt aus der Gruppe bestehend aus einem Harz auf der Basis von C₅, einem Phenolharz, einem Harz auf der Basis von Terpen, einem modifizierten Harz auf der Basis von Terpen, einem hydrierten Harz auf de Basis von Terpen und einem Harz auf der Basis von Kolophonium.

28. Laminierter Körper nach Anspruch 27, wobei das Harz (M) ein Phenolharz ist.

29. Laminierter Körper nach Anspruch 25, wobei das niedermolekulare Polymer (N) ein Styrol-Butadien-Copolymer ist.

30. Verfahren zur Herstellung eines laminierten Körpers nach einem der Ansprüche 1 bis 29, das die Schritte umfasst des schichtförmigen Aufbringens und Trocknens einer Beschichtungslösung, die eine klebefähige Zusammensetzung (I) und ein organisches Lösungsmittel umfasst, auf eine Oberfläche einer Harzfilmschicht (D) unter Bildung einer klebefähigen Schicht (F) und daraufhin Laminierens einer kautschukartigen Elastomerschicht (E) auf eine Oberfläche der klebefähigen Schicht (F) und Durchführens einer Vulkanisationsbehandlung.

31. Verfahren zur Herstellung eines laminierten Körpers nach einem der Ansprüche 1 bis 29, das die Schritte umfasst des schichtförmigen Aufbringens und Trocknens einer Beschichtungslösung, die eine klebefähige Zusammensetzung (I) und ein organisches Lösungsmittel umfasst, auf eine Oberfläche einer kautschukartigen Elastomerschicht (E) unter Bildung einer klebefähigen Schicht (F) und daraufhin Laminierens einer Harzfilmschicht (D) auf eine Oberfläche der klebefähigen Schicht (F) und Durchführens einer Vulkanisationsbehandlung.

32. Verfahren zur Herstellung eines laminierten Körpers nach Anspruch 30 oder 31, wobei eine Temperatur der Vulkanisationsbehandlung nicht geringer als 120 °C liegt.

33. Verfahren zur Herstellung eines laminierten Körpers nach Anspruch 30 oder 31, wobei das organische Lösungsmittel einen Löslichkeitsparameter nach Hildebrand (δ-Wert) von 14 bis 20 MPa aufweist.

34. Luftreifen, **gekennzeichnet durch** Verwendung eines laminierten Körpers nach einem der Ansprüche 1 bis 29.

## Revendications

1. Corps stratifié formé en joignant une couche de résine formant film (D) comprenant au moins une couche d'une composition de résine (C), dans laquelle une résine molle (B) ayant un module de Young à 23°C inférieur à celui d'une résine thermoplastique (A) est dispersée dans une matrice fabriquée à partir de la résine thermoplastique (A), à une couche caoutchouteuse d'élastomère (E) à travers une couche adhésive (F), dans lequel une composition adhésive (I) formée en malaxant pas moins de 0,1 partie en masse d'au moins l'un parmi un dérivé maléimide (H) ayant pas moins de deux sites réactionnels dans sa molécule et du poly-p-dinitrosobenzène sur la base de 100 parties en masse d'un composant de caoutchouc (G) est appliquée à la couche adhésive (F), dans lequel la résine thermoplastique (A) est un copolymère modifié d'éthylène-alcool de vinyle obtenu en faisant réagir un copolymère d'éthylène-alcool de vinyle et un module de Young à -20°C de la composition de résine (C) n'est pas supérieur à 1500 MPa.

2. Corps stratifié selon la revendication 1, dans lequel le module de Young à 23°C de la résine thermoplastique (A) excède 500 MPa et le module de Young à 23°C de la résine molle (B) n'est pas supérieur à 500 MPa.

3. Corps stratifié selon la revendication 1, dans lequel la résine molle (B) a un groupe fonctionnel réagissant avec un groupe hydroxyle.

4. Corps stratifié selon la revendication 1, dans lequel une taille moyenne de particules de la résine molle (B) n'est pas supérieure à 2 µm

5. Corps stratifié selon la revendication 1, dans lequel une teneur de la résine molle (B) dans la composition de résine (C) se situe à l'intérieur d'une plage de 10 à 30 % en masse.

6. Corps stratifié selon la revendication 1, dans lequel une teneur en éthylène du copolymère d'éthylène-alcool de vinyle est de 25 à 50 % en mole.

7. Corps stratifié selon la revendication 1, dans lequel un degré de saponification du copolymère d'éthylène-alcool de vinyle n'est pas inférieur à 90 %.

8. Corps stratifié selon la revendication 1, dans lequel le copolymère modifié d'éthylène-alcool de vinyle est obtenu en faisant réagir 1 à 50 partie(s) en masse d'un composé époxy sur la base de 100 parties en masse du copolymère d'éthylène-alcool de vinyle.

9. Corps stratifié selon la revendication 8, dans lequel le composé époxy est le glycidol ou l'époxypropane.

10. Corps stratifié selon la revendication 1, dans lequel la couche de résine formant film (D) comprend en outre au moins une couche fabriquée à partir d'un élastomère thermoplastique à base d'uréthane.

11. Corps stratifié selon la revendication 10, dans lequel l'élastomère à base d'uréthane est un uréthane à base de polyéther.

12. Corps stratifié selon la revendication 1, dans lequel la couche de résine formant film (D) a un coefficient de perméation à l'oxygène à 20°C et 65 % d'HR non supérieur à 3,0 x 10⁻¹² cm³/cm²•sec•cm de Hg.

13. Corps stratifié selon la revendication 1, dans lequel la couche de résine formant film (D) est réticulée.

14. Corps stratifié selon la revendication 1, dans lequel la couche caoutchouteuse d'élastomère (E) comprend pas plus de 50 % en masse d'un caoutchouc de butyle et/ou d'un caoutchouc de butyle halogéné comme composant de caoutchouc.

15. Corps stratifié selon la revendication 1, dans lequel une épaisseur de la couche de résine formant film (D) n'est pas supérieure à 200 µm et une épaisseur de la couche caoutchouteuse d'élastomère (E) n'est pas supérieure à 200 µm

16. Corps stratifié selon la revendication 1, dans lequel le composant de caoutchouc (G) ne comprend pas plus de 10 % en masse d'un polyéthylène chlorosulfoné.

17. Corps stratifié selon la revendication 1, dans lequel le composant de caoutchouc (G) ne comprend pas moins de 50 % en masse d'un caoutchouc de butyle et/ou d'un caoutchouc de butyle halogéné.

18. Corps stratifié selon la revendication 1, dans lequel le dérivé maléimide (H) est le 1,4-phénylènedimaléimide.

19. Corps stratifié selon la revendication 1, dans lequel la composition adhésive (I) comprend en outre pas moins de 0,1 partie en masse d'un accélérateur de vulcanisation (J) pour le caoutchouc sur la base de 100 parties en masse du composant de caoutchouc (G).

20. Corps stratifié selon la revendication 19, dans lequel l'accélérateur de vulcanisation (J) pour le caoutchouc est un accélérateur de vulcanisation à base de thiuram et/ou à base de dithiocarbamate substitué.

21. Corps stratifié selon la revendication 1, dans lequel la composition adhésive (I) comprend en outre 2 à 50 parties en masse d'une charge (K) sur la base de 100 parties en masse de la composition de caoutchouc (G).

22. Corps stratifié selon la revendication 21, dans lequel la composition adhésive (I) comprend 5 à 50 parties en masse d'une charge inorganique (L) comme charge (K) sur la base de 100 parties en masse de la composition de caoutchouc (G).

23. Corps stratifié selon la revendication 22, dans lequel la charge inorganique (L) est au moins l'une sélectionnée parmi le groupe constitué d'une silice de traitement par voie humide, d'hydroxyde d'aluminium, d'oxyde d'aluminium, d'oxyde de magnésium, de montmorillonite, de mica, de smectite, d'une montmorillonite organisée, d'un mica organisé et d'une smectite organisée.

24. Corps stratifié selon la revendication 21, dans lequel la composition adhésive (I) comprend du noir de carbone comme charge (K).

25. Corps stratifié selon la revendication 1, dans lequel la composition adhésive (I) comprend en outre pas moins de 0,1 partie en masse d'au moins l'une parmi une résine (M) et un polymère de bas poids moléculaire (N) ayant un poids moléculaire moyen en poids (Mw) de 1000 à 100000 lorsque que converti en polystyrène.

26. Corps stratifié selon la revendication 25, dans lequel le poids moléculaire moyen en poids du polymère de bas poids moléculaire (N) lorsque converti en polystyrène est de 1000 à 50000.

27. Corps stratifié selon la revendication 25, dans lequel la résine (M) est au moins l'une sélectionnée parmi le groupe constitué d'une résine à base de C₅, d'une résine phénolique, d'une résine à base de terpène, d'une résine à base de terpène modifié, d'une résine à base de terpène hydrogéné et d'une résine à base de colophane.

28. Corps stratifié selon la revendication 27, dans lequel la résine (M) est une résine phénolique.

29. Corps stratifié selon la revendication 25, dans lequel le polymère de bas poids moléculaire (N) est un copolymère de styrène-butadiène.

30. Procédé de production d'un corps stratifié tel que revendiqué selon l'une quelconque des revendications 1 à 29, qui comprend les étapes de revêtement et de séchage d'une solution de revêtement qui inclut une composition adhésive (I) et un solvant organique sur une surface d'une couche de résine formant film (D) pour former une couche adhésive (F), et ensuite la stratification d'une couche caoutchouteuse d'élastomère (E) sur une surface de la couche adhésive (F) et la conduite d'un traitement de vulcanisation.

31. Procédé de production d'un corps stratifié tel que revendiqué selon l'une quelconque des revendications 1 à 29, qui comprend les étapes de revêtement et de séchage d'une solution de revêtement qui inclut une composition adhésive (I) et un solvant organique sur une surface d'une couche caoutchouteuse d'élastomère (E) pour former une couche adhésive (F), et ensuite la stratification d'une couche de résine formant film (D) sur une surface de la couche adhésive (F) et la conduite d'un traitement de vulcanisation.

32. Procédé de production d'un corps stratifié selon la revendication 30 ou 31, dans lequel une température du traitement de vulcanisation n'est pas inférieure à 120°C.

33. Procédé de production d'un corps stratifié selon la revendication 30 ou 31, dans lequel le solvant organique a un paramètre de solubilité de Hildebrand (valeur δ) de 14 à 20 MPa^{1/2}.

34. Pneumatique **caractérisé par** l'utilisation d'un corps stratifié tel que revendiqué selon l'une quelconque des revendications 1 à 29.
